# EUROPEAN PATENT APPLICATION

(11) **EP 4 749 562 A1**
(43) Date of publication of application: **27.05.2026**
(21) Application number: 25216522.0
(22) Date of filing: 18.11.2025
(51) Int. Cl.: G06T 1/00

(54) **A COMPUTER-IMPLEMENTED METHOD FOR DETECTING AND DECODING ONE OR MORE WATERMARKS STORED WITHIN ONE OR MORE WATERMARKED REGIONS OF AN IMAGE**

(30) Priority: 20.11.2024 US 202463723069 P
(71) Applicant: Sasha ApS, 5000 Odense C (DK)
(72) Inventor: LARSEN, Matthew Helmi Leth, Copenhagen (DK); BUI, Tu, Guildford (GB); OLEKSANDRIVNA, Zhuha Olena, Kharkiv (UA)
(74) Representative: Patrade A/S

(57) **Abstract**

A computer-implemented method for detecting and decoding a watermarked image, the method comprising
- obtaining the watermarked image;
- determining an orientation of the watermarked image by processing a first trained data-driven model, wherein the watermarked image is fed as a digital input to the first trained data-driven model; and
- aligning the watermarked image in accordance with the orientation.

## Description

### FIELD OF TECHNOLOGY

The following relates to digital image watermarking, more specifically, to a system for detecting, correcting and retrieving a payload of a digital watermark. It introduces a novel way of modularising the decoding process via the utilisation of independent deep learning models.

### BACKGROUND

Imperceptible, yet robust, digital watermarking is a crucial technology for embedding information into images for purposes such as security, copyright protection, and verification with minimal impact on the visual properties of the image.

The utility of these technologies is greatly enhanced the more robust the watermarks are with regards to image alterations as a result of the images being copied, modified, and transmitted. The image alterations may be performed with either a benign purpose or malicious purpose; however, all types of alterations complicate reading the watermark hence there is a general need for improved methods for reading watermarks to extract the data

In recent years, the robustness of imperceptible digital watermarking has improved greatly, in part due to the introduction of deep learning models for encoding and decoding the watermark. However, various challenges still exist, and it has turned out to be rather difficult to address the multitude of alterations in a single step.

The following addresses some of these limitations by the introduction of additional models that are applied before the actual decoding of the watermark. Furthermore, the computer-implemented method for detecting and decoding watermarks stored within images should be able to run on a smart phone such that the required computation power is removed from central servers and complexities due to GDPR can at least in part be avoided by the central servers do not receive the watermarked image.

The payload of the watermark may include a digital identifier, which can be coupled to an owner of the original image and/or to a specific recipient as described in patent application US20240330490A1, wherein a central server has a database of additional information linked to images via said digital identifiers.

### SUMMARY

An aspect relates to a computer-implemented method for detecting and decoding one or more watermarks stored within one or more watermarked regions of an image

An aspect of embodiments of the invention is achieved by a computer-implemented method for detecting and decoding a watermarked image, the method comprising
- obtaining the watermarked image;
- determining an orientation of the watermarked image by processing a first trained data-driven model, wherein the watermarked image is fed as a digital input to the first trained data-driven model; and
- aligning the watermarked image in accordance with the orientation.

Images can be manipulated and/or altered. In particular, watermarked images may be rotated with respect to their original or previous orientation. When this happens, retrieving information on the original or previous image can be difficult. For this reason, it is important to transform the watermarked image to restore it to its original or previous orientation.

According to some embodiments, after the aligning step, the method comprises the step of decoding the watermarked image to obtain a payload of the watermark of the watermarked image.

Extracting the payload of a watermark which has an altered orientation can be difficult or impossible. Advantageously, the alignment of the watermarked image along the correct orientation before extracting the payload will improve the bit accuracy of the decoding process by a significant amount.

In some embodiments, there is provided a preliminary step before processing the first trained data-driven model, in which the watermarked image is tested for the presence of a watermark. This can be a first filter which prevents images with no watermark from being decoded. For example, this first filter may be implemented through a whole separate Machine Learning model to predict whether a watermark is present in the image or not. This may improve computational efficiency, because the determination of the orientation of the image through the first trained data-driven model will not be implemented unnecessarily on images without any form of watermark embedded into them.

In some embodiments, the method further comprises a step of transmitting the payload to a server. This can be useful if third parties need to access the watermark information.

In some embodiments, the first trained data-driven model is trained to determine the orientation of the watermarked image through the following steps:
- providing a plurality of first watermarked images and a plurality of first transformed images, wherein the first transformed images are the first watermarked images after one or more alterations and at least one of the alterations changes an orientation of watermarks in the first transformed images;
- feeding the plurality of the first transformed images into the first trained data-driven model ;
- predicting orientations of the plurality of first transformed images;
- updating weights of the first trained data-driven model to minimise an error between the predicted orientations and true orientations of the first transformed images.

The first watermarked images and the corresponding first transformed images constitute a training set which is used to train the first trained data-driven model , before this is used to determine an orientation of a real watermarked image. The first transformed images correspond to altered and/or manipulated versions of the respective first watermarked images. In this way, the first trained data-driven model can be then used to accurately determine or predict the orientation of a watermarked image. This can be done with high accuracy and precision.

In some embodiments, the step of providing the training set (i.e., the first
watermarked and transformed images) comprises the following steps for each first transformed image:
- receiving a first image;
- generating, by an encoder, the first watermarked image based on the first image and a digital watermark;
- transforming the first watermarked image into a first transformed image by performing one or more alterations to the first watermarked image;
- repeating the step of receiving, generating and transforming to provide the plurality of first watermarked images and the plurality of first transformed images.

In this way, a training set can be created by encoding images (which can be randomly selected) via digital watermarks, and then artificially altered in order to create a training set for the first trained data-driven model .

The plurality of watermarked images is, in some embodiments, just used as information for determining the true orientation of the first transformed images. In other words, the watermarked images can later be used to test the accuracy of the first trained data-driven model in predicting images' orientations. Hence, in some embodiments it is possible to omit providing the plurality of watermarked images if the original orientation is known or the change in orientation of the watermark is known.

The step of predicting orientations of the first transformed images may include generating a n-dimensional vector comprising the probability of orientation at each angle arc of a range of angles. In the case where n=360, then the predicting step predicts the probability of each angle degree in integers within a full 360 degree angle. The first trained data-driven model may output said n-dimensional vector.

Furthermore, the first trained data-driven model can also produce a second output, combined with the n-dimensional vector, which comprises a probability that the watermark is present or not, normalized to 1. For example, this output can be a number between 0 and 1, with 0 meaning that there is a 0% probability that the watermark is present and 1 meaning that there is a 100% probability that the watermark is present in the image. So in some examples, the first trained data-driven module takes the image as input and produces two outputs: a n-dimensional vector with the probability for each angle between 0 and n (n, for example, can be 360), and the probability that the watermark is present or not, in a value between 0 and 1.

This has also proven to be an excellent method for detecting a non-watermarked image as the probabilities will be low and spread evenly over the n-dimensional vector.

In some examples, the first trained data-model only produces one output which is the n-dimensional vector. For example, if the n-dimensional vector contains a distinct peak around a certain value of n, this may indicate that there is a strong chance that a watermark is present, at the orientation indicated by the peak. A smeared distribution of probabilities along the n-dimensional vector may, on the other hand, indicate that the watermark is too weak to be seen, or that there is no watermark at all. In these cases, the second output may be superfluous.

If the image contains a watermark, then there will be a domination probability on one of the angles, which dominant angle or integer becomes the predicted angle.

The resulting first trained data-driven model improves with the quality of training material. Thus, by performing controlled alterations to the watermarked images, it may be easier to reliably control the training compared to completely random images with random watermarks. The generating step performed by the encoder is in the best cases performed at random to avoid introducing some kind of biasing into the system. The images used can be any images as the described methods of embodiments of the present invention do not look at the specific items on the image.

In an aspect, the digital watermark may be embedded into the center of the image and randomly offset and cropped. The watermark is embedded into the center of the image, but then randomly offset and cropped to avoid biasing the model.

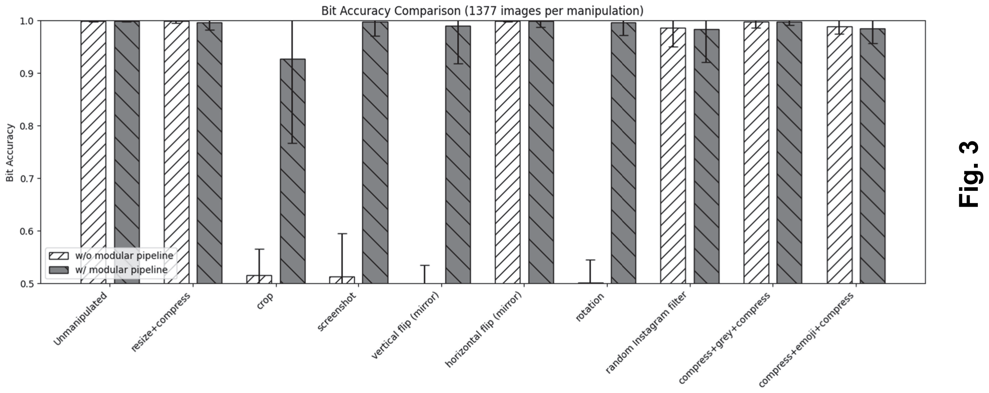

In some embodiments, the watermarked image is cropped to remove non-watermarked regions before the step of decoding as it improves bit accuracy as can be seen in figure 3 - i.e. a step of cropping the watermarked image to the one or more watermarked regions is performed before the step of decoding.

In an aspect, the one or more alterations may be chosen from;
- geometric alteration, such as crop, flip and/or resize; and/or
- colour alteration, such as saturation, brightness and/or contrast; and/or
- filter alterations, such as various Instagram filters; and/or
- scaling; and/or
- pixel alterations, such as blurring, noise and/or compression; and/or
- horizontal and/or vertical translation; and/or
- replacing an image portion of the first watermarked image.

The above-mentioned list should not be seen as an exhaustive list, however good training data should have a plurality of images being altered in accordance with one or more of the above.

The first trained data-driven model may be a machine learning based algorithm. The first trained data-driven model can also be called a Watermark Orientation Model. The first trained data-driven model may be, for example, a suitable Artificial Neural Network model. Examples of models which may be used are MobileNet or ResNet variants, trained on an image dataset with unique manipulation alterations, to identify the orientation of an image prior to decoding. The output may be a probability vector on the orientation.

In other embodiments various types of Convolutional Neural Networks can be used for the first trained data-driven model , provided that they are suitable to perform the task of predicting an orientation of a watermarked image according to the method of the present invention.

In the present application, the orientation of the watermarked image may be a rotation angle in the plane of image. However, the orientation may include along any of the x-axis, y-axis or z-axis. If the x-axis and the y-axis define the plane of the image, then rotation about the z-axis will be rotation of the watermark within the image plane.

It is simpler to predict the angle of rotation about the z-axis with higher accuracy compared to rotation about the x-axis and y-axis; however, it is expected that the entire orientation of the watermark can be detected by above mentioned first trained data-driven model .

In some embodiments the method comprises, after the aligning step, the following steps:
- determining one or more watermarked regions of the watermarked image by processing a second trained data-driven model , where the watermarked image is fed as a digital input to the second trained data-driven model,
- decoding at least one of the one or more watermarked regions to obtain one or more payloads of one or more watermarks of the at least one of the one or more watermarked region.

In some embodiments of the invention, the method combines the use of two, consecutive data-driven models (first and second) to identify the orientation and one or more watermarked regions in a watermarked image. Advantageously, this sequence relies on two separate models (which may also be separately trained) to perform the two steps. This means that, for example, the two models can be more accurate because they are trained to perform specific and narrow tasks, as opposed to have one model that needs training on multiple different tasks.

In some embodiments, the method further comprises, after decoding the at least one of the one or more watermarked regions, the step of transmitting the one or more payloads to the server, such that stored information about the image or the original image can be later obtained by, for example, a third party. For example, a third party may be a social media provider or a mobile device which requests the watermark of the image to identify the origin of the image, or other information which may be embedded in the watermark.

The initial step of finding the alignment of the image through the first trained data-driven model further improves the identification of one or more watermarked regions of the watermarked image.
The plurality of watermarked images is in embodiments just used as information for determining the true watermarked regions of the transformed images. Hence, it is possible to omit providing the plurality of watermarked images if the original watermarked regions are known or the change in the watermarked regions by the one or more alterations is known. The identification or localization of the one or more watermarked regions will improve the bit accuracy quite significantly as can be seen in Figure 3. The improvement differs from augmentation to augmentation, but for example the bit accuracy for a 30% cropped image is improved roughly 43 %-points, which is a quite significant improvement.

In some embodiments, the second trained data-driven model is trained to detect the one or more watermarked regions of the watermarked image through the following steps:
- providing a plurality of second watermarked images and a plurality of second transformed images, wherein the second watermarked images have one or more watermarked regions, and the second transformed images are the second watermarked images after one or more alterations;
- feeding the plurality of the second transformed images into the second trained data-driven model ;
- determining the one or more watermarked regions of the second transformed images;
- updating weights of the second trained data-driven model to minimise an error between the determined one or more watermarked regions and the real one or more watermarked regions of the corresponding second watermarked images.

In an aspect, the step of providing may comprise steps of
- receiving an image;
- generating, by an encoder, the second watermarked image based on the image and a digital watermark;
- transforming the second watermarked image into a second transformed image by performing one or more alterations to the second watermarked image;
- repeating the step of receiving, generating and transforming to provide the plurality of second watermarked images and the plurality of second transformed images.

The resulting second trained data-driven model improves with the quality of training material. Thus, by performing controlled alterations to the watermarked images, then it may be easier to reliably control the training compared to completely random images with random watermarks. The outputting step performed by the encoder is in the best cases performed at random to avoid introducing some kind of biasing into the system. The images used can be any images as the described methods of embodiments the present invention does not look at the specific items on the image.

In an aspect, the one or more alterations may be chosen from;
- geometric alteration, such as crop, flip and/or resize; and/or
- colour alteration, such as saturation, brightness and/or contrast; and/or
- filter alterations, such as various Instagram filters; and/or
- scaling; and/or
- pixel alterations, such as blurring, noise and/or compression; and/or
- horizontal and/or vertical translation; and/or
- rotation of the second watermarked image; and/or
- orientation of the second watermarked image; and/or
- replacing an image portion of the second watermarked image.

The above-mentioned list should not be seen as an exhaustive list, however good training data should have a plurality of images being altered in accordance with one or more of the above.

In an aspect, the step of updating weights may be performed by
- computing a bounding box loss between the determined one or more watermarked regions and the real one or more watermarked regions of the second watermarked image;
- backpropagate gradients of the bounding box loss to update the weights of the second trained data-driven model.

The second trained data-driven model may be called a Watermark Detection Model. The second trained data-driven model may be any suitable artificial neural network model for the task. An example of model that can be used is a model which implements the YOLO (You Only Look Once) method, such as a modified YOLOX model trained to detect the region containing the watermark, regardless of surrounding changes in the image, ensuring accurate extraction of the embedded sequence and increased robustness to cropping and bordering (e.g. the UI from a screenshot). The output may follow a traditional multi-scale YOLOX bounding box definition. This example should not be considered limiting, as there may be other suitable Artificial Neural Network models to perform the tasks of the second trained data-driven model according to various embodiments of the invention.

The described computer-implemented method can be performed on basically all handheld devices today such as smart phones or tablets, thus it can also be performed on PC or Macs or similar devices. Some older versions may have a processor which is too slow perform the method without waiting for a long time. Since the computer-implemented method for detecting and decoding one or more watermarks stored within one or more watermarked regions of an image, the method can be employed in digital security, image verification, copyright management, and other areas requiring robust watermarking capabilities.

According to another aspect of the invention, there is provided a system for detecting and decoding a watermarked image, the system comprising:
a processor,
wherein the processor is configured to perform the following steps:
- obtaining the watermarked image;
- determining an orientation of the watermarked image by processing a first trained data-driven model, wherein the watermarked image is fed as a digital input to the first trained data-driven model; and
- aligning the watermarked image in accordance with the orientation.

Said system may have a processor configured to perform any combination of the method steps discussed in the preceding paragraphs.

An aspect of embodiment of the invention is achieved by a non-transitory computer-readable medium having stored thereon:
- a first trained data-driven model trained by the method steps described in this application, and/or
- a second data-driven model obtainable by the method described in this application.

According to another aspect of the invention, there is provided any computation unit with a processor being in communication with the non-transitory computer-readable medium, the processor being able to utilize the first and second trained data-driven model to identify images encoded with watermarks.

The non-transitory computer-readable medium may be USB drive, a solid-state disk (SSD) or hard disk or similar.

An aspect of embodiments of the invention is achieved by smart phone comprising a processor and a non-transitory computer-readable medium, wherein the non-transitory computer-readable medium having further stored thereon instructions causing the processor to perform any steps of the methods described in this application. For example, an image received by the smart phone can be checked for watermarks and in case a watermark is identified, then the watermark's payload can be shared with a central server which may be able to share information about the original owner and/or receive a share statement.

The mentioned ML models are typically used for detecting objects that are visible to humans. However, in this application the ML models (first trained data-driven model and the second trained data-driven model ) specifically train the models for detecting a specific, imperceptible digital watermarking technology. The region detection and orientation rely on locating and correcting the humanly imperceptible watermark itself, rather than relying on features in the image itself which other and less robust watermark models use.

The watermarks described in embodiments of the present disclosure can be any digital and humanly imperceptible watermarks stored within an image. Digital watermarking is in itself a well-known technology and the skilled person would be able to select a suitable technology for applying a humanly imperceptible watermark to an image.

The data-driven models described in the present application may be trained using MIR Flickr data set and/or the Google Open Images dataset and/or a different image dataset.

### BRIEF DESCRIPTION

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
Fig. 1 illustrates a computer-implemented method for detecting and decoding one or more watermarks stored within one or more watermarked regions of an image.
Fig. 2 illustrates a computer-implemented method for determining an orientation of a watermarked image by processing a first trained data-driven model and determining a watermarked region of the watermarked image by processing a second trained data-driven model.
Fig. 3 illustrates a graph showing, for different types of image alterations, the changes to bit accuracy with and without determining a watermarked region of the image prior to decoding the watermark.
Fig. 4 illustrates a graph showing the distribution of PSNR (Peak Signal-to-Noise Ratio) for images with or without processing through the first and second trained data-driven model s.

### DETAILED DESCRIPTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

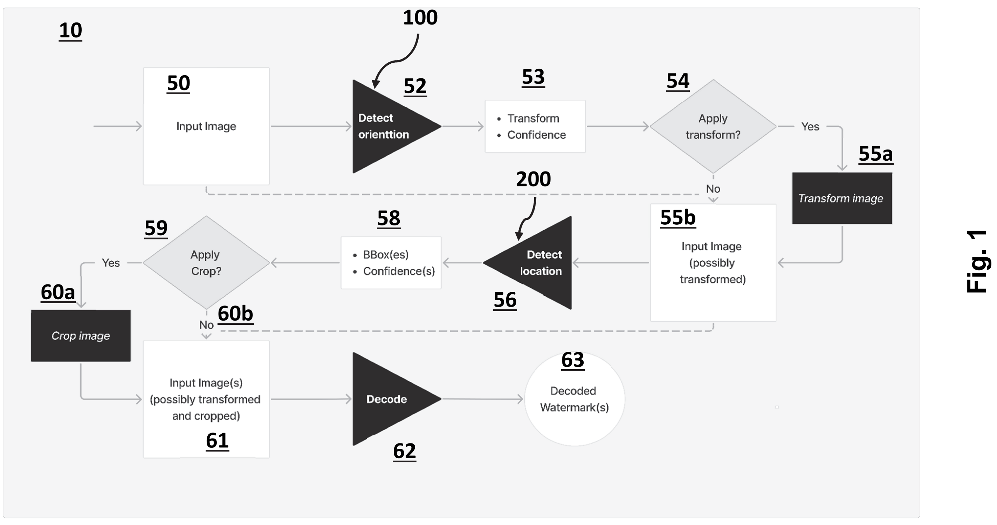

Fig. 1 illustrates a computer-implemented method 10 for detecting and decoding a watermark stored within a watermarked region of an image.

Firstly, an input image is received 50 by a source, which can be any source, such as a mobile device, a computer or the like.

After the input image is provided, and before step 52, there may be an optional scaling step (not shown) in which the input image is scaled to, for example, 256x256. Any scale can be used. Furthermore, even though the scaling further improves the efficiency, it is not a required step.

Before the orientation of the watermarked image is determined, there may be an optional step in which, either the model 100 or another model determines the probability of a watermark being present in the image. This additional step may further increase computational efficiency, by avoiding processing further images which have no watermark embedded. This step is not illustrated in the image.

In step 52, the orientation of the watermarked image is determined. This step is implemented through a first trained data-driven model 100, trained to predict the orientation of a watermarked image. The first trained data-driven model 100 is fed the watermarked image as an input and then predicts the orientation of said image. The orientation of the image may be predicted through the outputs (shown in 53) previously described in this application, e.g., through an n-dimensional vector indicating a probability distribution of orientation of the watermark between 0 and n (such as n=360) degrees of arc, and in some cases through a probability value indicating how likely it is that there is a watermark present in the image. The first trained data-driven model 100 may be any suitable Convolutional Neural Network (CNN) model such as MobileNet, ResNet or another CNN machine learning model. In this step an orientation of the watermarked image is predicted.

Once the orientation of the watermarked image is predicted, in step 54, the image is transformed (rotated) in accordance with the predicted/determined orientation (55a) unless this is not required (55b). The orientation may not be required if, for example, the watermark 20 has not been rotated along any dimension (i.e., if the processed watermarked image has the same orientation as the original or previous watermarked image).

After this step (either 55a or 55b) there may be a second step of rescaling, as the one described above. This step is entirely optional and is not shown in Fig. 1.

In step 56, the image (which may or may not have been transformed in the previous step) is fed as input into the second trained data-driven model 200. The second trained data-driven model 200 determines one or more watermarked regions of the watermarked image. In other words, regions in the inputted image which contain a watermark will be located by the second trained data driven model 200.

In step 58, the second trained data-driven model 200 outputs bounding boxes for each of a number of regions, in which a watermark is predicted to be present. The second trained data-model further comprises confidence scores ("bounding box confidence") for each region, which is a number between 0 and 1, indicating the probability that a watermark is actually present in said region (within the bounding box). In some examples, before outputting the bounding boxes, the model further filters out the bounding boxes associated with a low probability of watermark presence.

The image is transformed in accordance with the predicted bounding box if it is required (59, 60a). This transformation step comprises cropping of the image around the area(s) correspondent to the bounding box(es) (60a). If the transformation is not required, the image is not transformed (60b). Advantageously, cropping the image within the identified bounding box(es) can make the decoding process, carried out later on by decoding module 62, computationally less intensive. This can be advantageous, for example, when the watermark is embedded in a relatively small area of the image.

After either step 60a or 60b is completed, the image is ready (61) to be fed as input to the decoding module in step 62.

There may be a third step of rescaling before decoding 62 at the decoding module, as the step described in the paragraphs above. This step is entirely optional.

In step 62, the watermark is decoded, and a payload of the watermark is extracted 63. This payload may then be shared with a central server to receive information about the image. The modular approach of embodiments increases the robustness of identifying and decoding of watermarks despite significant image distortions or transformations. This allows a wider application as embodiments of the method can be employed in digital security, image verification, copyright management, and other areas requiring robust watermarking capabilities. With reference to Fig. 1, in some alternative examples, the decoding module is configured to perform a measure on the extracted watermark, to gauge whether said watermark is real or some random and wrong prediction. This can be done, for example, through a statistical null-hypothesis test. This extra step can be useful to filter out un-watermarked and heavily manipulated watermarked images. This step can replace the pre-filtering step which has been described in this application, i.e., the step which may occur for example before step 52 or at step 52 of Fig. 1, in which watermarked images with weak or non-existent watermarks are excluded from the pipeline.

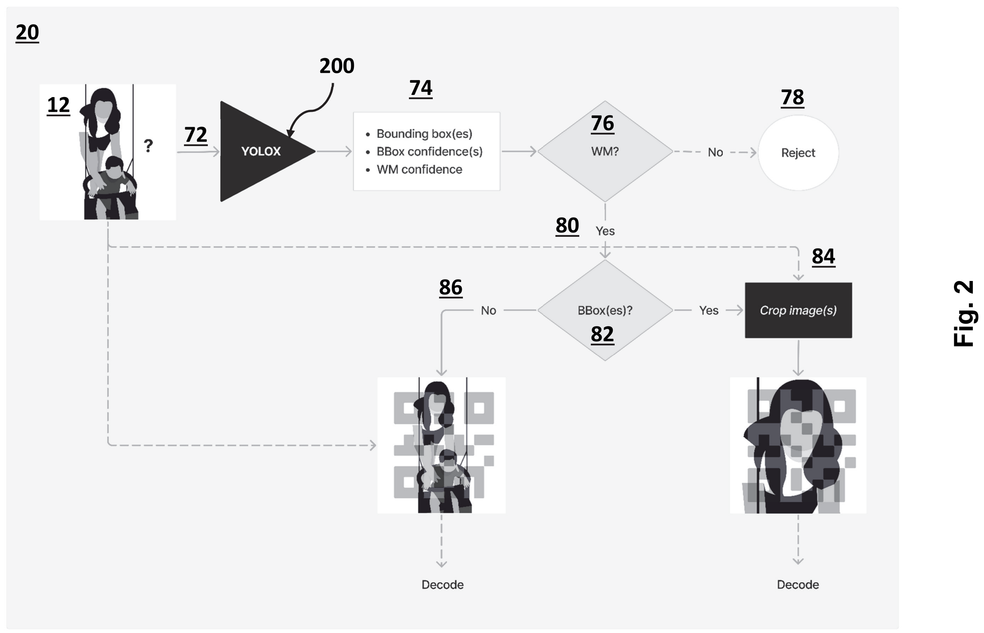

Fig. 2 discloses a method 20 for detecting and decoding a watermarked image 12. In this case, the method determines in which region(s) of the image 12 there is an embedded watermark. In some examples, there may be a preliminary step of determining whether a watermark is present in image 12 at all. This preliminary step may occur either at the model 200, or before, in a separate module.

Image 12 is an image which may or may not be watermarked. Furthermore, if a watermark is embedded in the image, it is unknown, before said image 12 is processed through method 20, where in the image is the watermark embedded. For example, the watermark may be embedded in a confined area of the image, or in one or more areas of the image.

The image 12 is inputted, at step 72, into a YOLOX CNN model 200, which is trained to detect the presence of a watermark (which is invisible to the naked eye) into the image 12. The YOLOX model is only an example, and other CNN models may be used with the same scope.

After processing the image 12, the YOLOX model outputs three elements (see 74): a bounding box, a confidence linked to the bounding box and a confidence value, i.e., a value indicating the probability that a watermark is embedded in the region within the bounding box. Whilst in this example there is only one region and thus only one bounding box is calculated, multiple bounding boxes can also be outputted by the model if there is more than one region with a predicted watermark within it.

At step 76, it is determined whether a watermark is embedded in image 12 or not. If the answer is negative, then the method stops at step 78, with the rejection of the image 12. No further step is taken, as there is no watermark to be decoded.

If, on the contrary, the answer is positive (step 80), then the method proceeds to step 82, in which it is determined whether it is required or necessary to crop the image within the computed bounding box (or boxes, in case of multiple regions with watermarks). For example, it may be required to crop the image if the watermark is confined within a bounding box within a particular, confined area of the image.

In this example, two possible scenarios are depicted.

In the first scenario 84, the watermark is confined within an area around the face of the woman depicted in image 12. Because the area in which the watermark is confined is smaller than the total image area, the method determines that the image should be cropped within the bounding box identifying said watermark area, before extracting the payload of the watermark.

In the second scenario 86, the watermark is found to be spread through the whole image 12. In this case, the method determines to not crop the image, before extracting the payload of the watermark.

In both scenarios 84 and 86 the watermark is illustrated by a QR code symbol. It is noted, however, that the QR code symbol is here only used to represent the concept of a watermark embedded in a particular region of an image. However, the real watermark will not be visible to a human person, and it will not be a QR code.

The cropping phase may be optional. An advantage of cropping the image around the area where the watermark is confined is that it reduces computational waste, because unnecessary parts of the image would not be analysed in the payload extraction step (here not illustrated).

After the image is either cropped 84 or not cropped 86, the image is fed in a decoding module, similar to the module described at step 62 of Fig. 1. At that point, the payload of the watermark is extracted.

Alternatively to YOLO methods, the trained data-driven model 200 may be a ResNet algorithm or a MobileNet algorithm used for predicting an orientation of the watermark. After predicting, the watermarked image 12 is transformed by rotation in accordance with the predicted orientation. A step of decoding may be performed to extract the watermark payload.

Fig. 3 illustrates a graph showing the changes to the bit accuracy with and without determining a watermarked region of the image prior to decoding the watermark. The data is shown for different types of image alterations which have been conducted prior to feed the images to the data-driven models. More specifically, the darker columns show the bit accuracy for images that have been processed to determine the orientation and watermarked regions within them, whilst the white column represents the bit accuracy for images which have not gone through this process.

Below there is a table with implementation details on the various types of image manipulation which have been used to test the bit accuracy.

| **Alteration** | **Parameters** |
|---|---|
| Resize + compression. | Max size = 1024 px, compression percentage [30,80]%. |
| Crop. | Crop percentage [30,50]% (of each axis). |
| Screenshot. | Resolution = 1440x3200px. |
| Flip. | Type = vertical & horizontal. |
| Rotation. | Degree = [10, 350]°. |
| Instagram filters. | Randomised. |
| Compress + grey + compress. | Compression percentage = [30,80]% |
| Compress + emoji + compress. | Emoji count = 5, compression percentage = [30,80]%, random placement. |

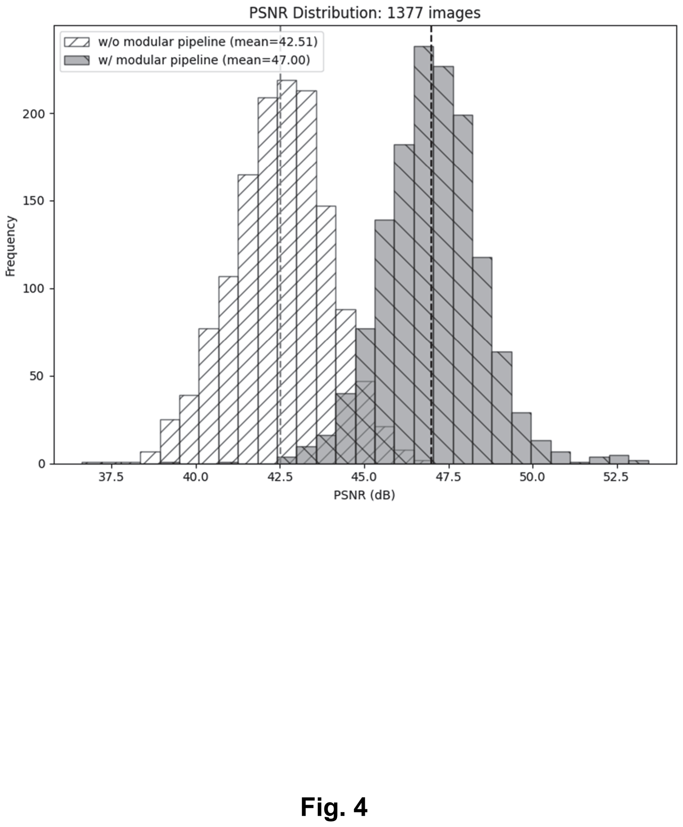

Figure 4 illustrates the distribution of PSNR (Peak Signal-to-Noise Ratio) in two scenarios. The first distribution curve (in white) is for images that have not gone through the pipeline to determine orientation and then watermarked regions within them (i.e., the process of orientation determination and then identification of watermarked region(s)). The second distribution curve (in grey) is for images that have gone through the pipeline. As shown by the difference in the two distributions, the image quality is not compromised by the method hereby described, as the PSNR distribution is very similar.

In general, embodiments of the method improve the bit accuracy especially in relation to cropping of images or applying a black box border or applying memes. The solution however loses a bit of accuracy if the image is resized into a too small size as can be seen at resize 128.

The graph is made using a combined dataset with some images from Flickr-Faces-High-Quality (FFHQ) and a small set of mobile phone selfies (found on HuggingFace datasets), the set comprising 1377 images in total and a centred square region using 75% of the minimum axis.

## Claims

1. A computer-implemented method for detecting and decoding a watermarked image, the method comprising
- obtaining the watermarked image;
- determining an orientation of the watermarked image by processing a first trained data-driven model, wherein the watermarked image is fed as a digital input to the first trained data-driven model; and
- aligning the watermarked image in accordance with the orientation.

2. The method according to claim 1, further comprising, after the aligning step:
- decoding the watermarked image to obtain a payload of the watermark of the watermarked image, and optionally further comprising, after the decoding step:
- transmitting the payload to a server.

3. The method according to claim 1, wherein the method comprises, after the aligning step, the following steps:
- determining one or more watermarked regions of the watermarked image by processing a second trained data-driven model, where the watermarked image is fed as a digital input to the second trained data-driven model,
- decoding at least one of the one or more watermarked regions to obtain one or more payloads of one or more watermarks of the at least one of the one or more watermarked region, and optionally further comprising, after decoding the at least one of the one or more watermarked regions, the step of:
- transmitting the one or more payloads to the server.

4. The method according to any preceding claim, wherein the first trained data-driven model is trained to determine the orientation of the watermarked image through the following steps:
- providing a plurality of first watermarked images and a plurality of first transformed images, wherein the first transformed images are the first watermarked images after one or more alterations and at least one of the alterations changes an orientation of watermarks in the first transformed images;
- feeding the plurality of the first transformed images into the first trained data-driven model ;
- predicting orientations of the plurality of first transformed images;
- updating weights of the first trained data-driven model to minimise an error between the predicted orientations and true orientations of the first transformed images.

5. The method according to claim 4, wherein the step of providing comprises steps of:
- receiving a first image;
- generating, by an encoder, the first watermarked image based on the first image and a digital watermark;
- transforming the first watermarked image into a first transformed image by performing one or more alterations to the first watermarked image;
- repeating the step of receiving, generating and transforming to provide the plurality of first watermarked images and the plurality of first transformed images, and optionally wherein in the generating step, the digital watermark is embedded into the centre of the first image and randomly offset and cropped.

6. The method according to any of claims 3 to 5, wherein the second trained data-driven model is trained to detect the one or more watermarked regions of the watermarked image through the following steps:
- providing a plurality of second watermarked images and a plurality of second transformed images, wherein the second watermarked images have one or more watermarked regions, and the second transformed images are the second watermarked images after one or more alterations;
- feeding the plurality of the second transformed images into the second trained data-driven model ;
- determining the one or more watermarked regions of the second transformed images;
- updating weights of the second trained data-driven model to minimise an error between the determined one or more watermarked regions and the real one or more watermarked regions of the corresponding second watermarked images.

7. The method according to claim 6, wherein the step of updating weights are performed by:
- computing a bounding box loss between the determined one or more watermarked regions and the real one or more watermarked regions of the second watermarked image;
- backpropagate gradients of the bounding box loss to update the weights of the second trained data-driven model .

8. The method according to claim 6 or 7, wherein the step of providing comprises steps of
- receiving an image;
- generating, by an encoder, the second watermarked image based on the image and a digital watermark;
- transforming the second watermarked image into a second transformed image by performing one or more alterations to the second watermarked image;
- repeating the step of receiving, generating and transforming to provide the plurality of second watermarked images and the plurality of second transformed images.

9. The method according to any of claims 4 to 8, wherein the one or more alterations are chosen from:
- geometric alteration, such as crop, flip and/or resize; and/or
- colour alteration, such as saturation, brightness and/or contrast; and/or
- filter alterations, such as various Instagram filters; and/or
- scaling; and/or
- pixel alterations, such as blurring, noise and/or compression; and/or
- horizontal and/or vertical translation; and/or
- rotation of the watermarked image; and/or
- orientation of the watermarked image; and/or
- replacing an image portion of the watermarked image.

10. A system for detecting and decoding a watermarked image, the system comprising:
a processor,
wherein the processor is configured to perform the following steps:
- obtaining the watermarked image;
- determining an orientation of the watermarked image by processing a first trained data-driven model, wherein the watermarked image is fed as a digital input to the first trained data-driven model; and
- aligning the watermarked image in accordance with the orientation.

11. The system of claim 10, wherein the processor is further configured to perform the following steps, after the aligning step:
- decoding the watermarked image to obtain a payload of the watermark of the watermarked image, and optionally wherein the processor is further configured to perform the following steps:
- transmitting the payload to a server.

12. The system of claim 10, wherein the processor is further configured to perform the following steps, after the aligning step:
- determining one or more watermarked regions of the watermarked image by processing a second trained data-driven model, where the watermarked image is fed as a digital input to the second trained data-driven model,
- decoding at least one of the one or more watermarked regions to obtain one or more payloads of one or more watermarks of the at least one of the one or more watermarked region.

13. A non-transitory computer-readable medium with instructions stored thereon, the instructions causing a processor to perform the steps of a method for detecting and decoding a watermarked image, the method comprising
- obtaining the watermarked image;
- determining an orientation of the watermarked image by processing a first trained data-driven model, wherein the watermarked image is fed as a digital input to the first trained data-driven model; and
- aligning the watermarked image in accordance with the orientation.

14. The non-transitory computer-readable medium according to claim 13, wherein the processor is further configured to perform the following steps, after the aligning step:
- decoding the watermarked image to obtain a payload of the watermark of the watermarked image, and optionally
- transmitting the payload to a server.

15. The non-transitory computer-readable medium according to claim 13, wherein the processor is further configured to perform the following steps, after the aligning step:
- determining one or more watermarked regions of the watermarked image by processing a second trained data-driven model, where the watermarked image is fed as a digital input to the second trained data-driven model,
- decoding at least one of the one or more watermarked regions to obtain one or more payloads of one or more watermarks of the at least one of the one or more watermarked region.
